# EUROPEAN PATENT APPLICATION

(11) **EP 1 562 152 A2**
(43) Date of publication of application: **10.08.2005**
(21) Application number: 05001867.0
(22) Date of filing: 27.01.2005
(51) Int. Cl.: G07C 5/00, G07C 5/08

(54) **Credit-points managing apparatus, vehicle, credit-points calculating method, and a computer product**

(30) Priority: 06.02.2004 JP 2004031267
(71) Applicant: Pioneer Corporation, Tokyo 153-8654 (JP)
(72) Inventor: Haruki, Matsuaki, Tokyo 153-8654 (JP); Akisawa, Hideshi, Tokyo 153-8654 (JP); Takahashi, Tomomichi, Tokyo 153-8654 (JP); Sugano, Kazuo, Tokyo 153-8654 (JP); Kojima, Munetaka, Tokyo 153-8654 (JP); Kitamura, Ichio, Tokyo 153-8654 (JP)
(74) Representative: Browne, Robin Forsythe, Dr.

(57) **Abstract**

The system and method to detect whether a vehicle is in a halting state. If the vehicle is in the halting state, then information pertaining to a status of an engine of the vehicle is obtained.
Credit-points are calculated based on the status of the engine. For example, if the vehicle is in the halting state and the engine is not running, then credit-points are given.

## Description

### BACKGROUND OF THE INVENTION

### 1) Field of the Invention

The present invention relates to a technology for giving credit-points to a vehicle that emits less harmful gases.

### 2) Description of the Related Art

Global warming due to emission of carbon dioxide (CO₂) has become a major environmental concern in recent years. Idling of vehicles causes unnecessary CO₂ emission. Thus, keeping drivers from idling their vehicles would lead to protecting the earth's environment.

Ways have been considered for encouraging environment consciousness among vehicle users, such as by announcing to others by some means that the vehicle user is practicing idle stop. One such announcement technique is the use of an idle stop lamp. Japanese Patent Laid-Open Publication No. 2003-260941 discloses a related technology.

However, the conventional technologies fail to prove the effect of idling stop in concrete numerical terms, thereby making it difficult to offer incentives to vehicle users who practice idling stop. Consequently, there has not been much of a positive impact on the environment.

### SUMMARY OF THE INVENTION

It is an object of the present invention to at least solve the problems in the conventional technology.

A credit-points managing apparatus according to an aspect of the present invention includes a halt information obtaining unit that obtains information that indicates whether a vehicle is in a halting state; an engine status information obtaining unit that obtains information pertaining to a status of an engine of the vehicle when the halt information obtaining unit obtains information indicating that the vehicle is in a halting state; and a credit-points calculating unit that calculates credit-points based on the status of the engine obtained by the engine status information obtaining unit.

A vehicle according to another aspect of the present invention includes the above credit-points managing apparatus.

A credit-points calculating method according to still another aspect of the present invention includes obtaining information that indicates whether a vehicle is in a halting state; obtaining information pertaining to a status of an engine of the vehicle when the information is obtained indicating that the vehicle is in a halting state; and calculating credit-points based on the obtained status of the engine.

A computer program according to still another aspect of the present invention causes a computer to execute the above method according to the present invention.

A computer-readable recording medium according to still another aspect of the present invention stores therein the above computer program according to the present invention.

The other objects, features, and advantages of the present invention are specifically set forth in or will become apparent from the following detailed description of the invention when read in conjunction with the accompanying drawings.

### BRIEF DESCRIPTION OF THE DRAWINGS

Fig. 1 is a block diagram of a functional configuration of a credit-points managing apparatus according to an embodiment of the present invention;
Fig. 2 is a block diagram of a functional configuration of a credit-points managing apparatus according to another embodiment of the present invention;
Fig. 3 is a flow chart of the operations performed by the credit-points managing apparatuses shown in Figs. 1 and 2;
Fig. 4 is a flow chart of another example of the operations performed by the credit-points managing apparatuses shown in Figs. 1 and 2;
Fig. 5 is a flow chart of the operations (plus credit-points output) performed by the credit-points calculating units of the credit-points managing apparatuses shown in Figs. 1 and 2;
Fig. 6 is a flow chart of the operations (minus credit-points output) performed by the credit-points calculating units of the credit-points managing apparatuses shown in Figs. 1 and 2;
Fig. 7 is a schematic of a credit-points managing system;
Fig. 8 is a schematic of another example of a credit-points managing system;
Fig. 9 is a schematic of yet another example of a credit-points managing system;
Fig. 10 is a hardware configuration of a credit-points managing apparatus;
Fig. 11 is a hardware configuration of a server and an information processing terminal device of a credit-points managing system;
Fig. 12 is a list of the information collected by various sensors;
Fig. 13 is a flow chart of the operations performed by a credit-points managing apparatus;
Fig. 14 is a table of the relation between map information and location group;
Fig. 15 is a table of the location groups and their details; and
Fig. 16 is a flow chart of another example of the operations performed by a credit-points managing apparatus.

### DETAILED DESCRIPTION

Exemplary embodiments of the credit-points managing apparatus, the vehicle, the credit-points calculating method, and the credit-points calculating program or computer product according to the present invention are explained in detail with reference to the accompanying drawings.

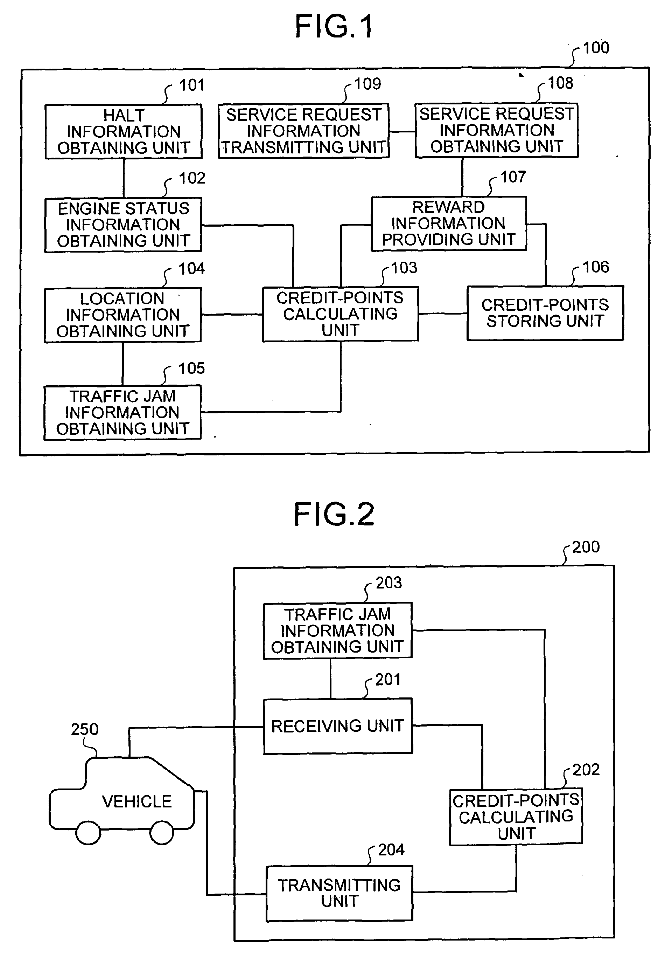

The details of the credit-points managing apparatus according to an embodiment of the present invention are explained. Fig. 1 and Fig. 2 are block diagrams of a functional configuration of the credit-points managing apparatus according to an embodiment of the present invention.

In Fig. 1, a credit-points managing apparatus 100 installed in a vehicle, which may be, for example, a four-wheeler or a two-wheeler, includes a halt information obtaining unit 101, an engine status information obtaining unit 102, a credit-points calculating unit 103, a location information obtaining unit 104, a traffic jam information obtaining unit 105, a credit-points storing unit 106, a reward information providing unit 107, a service request information obtaining unit 108, and a service request information transmitting unit 109.

When the vehicle comes to a halt, the halt information obtaining unit 101 obtains information that the vehicle is in a halting state, i.e., that the vehicle has stopped. The specific method of detecting that the vehicle is in a halting state is explained later.

When the halt information obtaining unit 101 obtains the information that the vehicle has come to a halt, the engine status information obtaining unit 102 obtains information pertaining to the status of a driving power source of the vehicle, i.e.., the engine. The engine status pertains to an ON state (that is, an idling state) of the engine of the vehicle and an ON state continuation duration, and an OFF state (that is, an idling stop state) of the engine of the vehicle and an OFF state continuation duration.

The credit-points calculating unit 103 calculates credit-points earned by the vehicle based on the status of the engine obtained by the engine status information obtaining unit 102. In particular, the credit-points calculating unit 103 calculates the credit-points based on the numerical value obtained by multiplying an amount of CO₂ emitted from the vehicle in a predetermined duration by the OFF state continuation duration of the engine of the vehicle. Alternatively, the credit-points may be calculated based on the numerical value obtained by multiplying the amount of CO₂ emitted from the vehicle in a predetermined duration (one second, for instance) by a part of the OFF state continuation duration of the engine of the vehicle. The credit-points calculated based on the OFF state continuation duration of the engine is preferably plus or positive credit-points.

The credit-points calculating unit 103 calculates the credit-points based on the numerical value obtained by multiplying the amount of CO₂ emitted from the vehicle in a predetermined duration by the ON state continuation duration of the engine of the vehicle. Alternatively, the credit-points may be calculated based on the numerical value obtained by multiplying the amount of CO₂ emitted from the vehicle in a predetermined duration (one second, for instance) by a part of the ON state continuation duration of the engine of the vehicle. A part of the continuation duration is the duration obtained by subtracting a delay time (20 seconds, for instance) from the continuation duration. The credit-points calculated based on the ON state continuation duration is preferably minus or negative credit-points.

The credit-points calculating unit 103 may collect the plus credit-points and the minus credit-points separately or may add them together.

The location information obtaining unit 104 obtains information pertaining to a location of the vehicle. In particular, the information pertaining to the location includes longitudinal and latitudinal information of the vehicle. The credit-points calculating unit 103 may also calculate the credit-points based on the status of the engine obtained by the engine status information obtaining unit 102, as well as the location information obtained by the location information obtaining unit 104.

The traffic jam information obtaining unit 105 obtains information pertaining to the status of the traffic jam at the location according to the location information obtained by the location information obtaining unit 104 or at an associated location that is associated with the location according to the location information. The associated location may include, when the traffic jam spans over a long distance, the location of origin of the traffic jam, in addition to the location of the vehicle. The credit-points calculating unit 103 may also calculate the credit-points based on the status of the engine obtained by the engine status information obtaining unit 102, the information pertaining to the location obtained by the location information obtaining unit 104, and the information obtained from the traffic jam information obtaining unit 105. More specifically, the credit-points calculating unit 103 may set the locations where idling stop is mandatory and where idling stop should be encouraged, and calculates the credit-points based on these set locations.

The credit-points storing unit 106 accumulates the credit-points calculated by the credit-points calculating unit 103. The credit-points storing unit 106 may accumulate the plus credit-points and the minus credit-points separately, or may add them together.

The reward information providing unit 107 provides reward information to the vehicle user pertaining to rewards against the credit-points accumulated based on the credit-points calculated by the credit-points calculating unit 103 and the credit-points accumulated by the credit-points storing unit 106. In particular, the reward information is information pertaining to the contents of the services (for instance, giveaways, etc.) provided according to the credit-points accumulated.

More specifically, the reward information providing unit 107 obtains the credit-points and, based on a table (not shown) in which the credit-points and various types of services are associated, selects a relevant service from among the plurality of services. A single service or a plurality of services may be selected. Each of the credit-points may also be associated with a combination of services.

Further, the reward information providing unit 107 notifies the vehicle user of the selected service. The selected service may be conveyed audibly or visually, such as through a car navigation system and a cell phone.

The service request information obtaining unit 108 obtains service request information from the vehicle user who has been offered the reward information by the reward information providing unit 107. In particular, the service request information obtaining unit 108 receives the information the vehicle user inputs by selecting the service from the reward information.

The service request information transmitting unit 109 sends service request information that is obtained from the service request information obtaining unit 108 to a provider who provides the service to the vehicle user. In particular, based on the service request information that is obtained from the service request information obtaining unit 108, the service request information transmitting unit 109 provides notification of the service request information selected by the vehicle user along with the vehicle user information.

In Fig. 2, a credit-points managing apparatus 200 includes a receiving unit 201, a credit-points calculating unit 202, a traffic jam information obtaining unit 203, and a transmitting unit 204.

When a vehicle 250, which may, for example, a four-wheeler or a two-wheeler, is in a halting state, the receiving unit 201 receives from the vehicle 250 information pertaining to the status of the driving power source of the vehicle 250. The credit-points calculating unit 202 calculates the credit-points based on the information pertaining to the status of the driving power source received from the receiving unit 201. The credit-points calculating unit 202 in Fig. 2 is both structurally and functionally identical to the credit-points calculating unit 103 in Fig. 1, and hence is not explained in detail here.

The receiving unit 201 may also receive from the vehicle 250 information pertaining to the location of the vehicle 250, and the credit-points calculating unit 202 may calculate the credit-points based on the received information pertaining to the status of the engine and the location.

The traffic jam information obtaining unit 203 obtains information pertaining to the state of a traffic jam at the location of the vehicle 250 or at an associated location that is associated with the location of the vehicle 250. The information pertaining to the state of the traffic jam obtained by the traffic jam information obtaining unit 203 may be included in the information sent from the vehicle 250 and received by the receiving unit 201. Alternatively, the traffic jam information gathering unit 203 may obtain the information pertaining to the state of the traffic jam independently of the information sent from the vehicle 250.

The credit-points calculating unit 202 may calculate the credit-points based on the received information pertaining to the engine status, the location, and the information obtained from the traffic jam information obtaining unit 203. The traffic jam information obtaining unit 203 in Fig. 2 is identical both structurally and functionally to the traffic jam information obtaining unit 105 of Fig. 1, and hence is not described in detail here.

The transmitting unit 204 sends to the vehicle 250 information pertaining to the credit-points calculated by the credit-points calculating unit 202. By receiving the information pertaining to the credit-points, the vehicle user can verify the credit-points that have been earned.

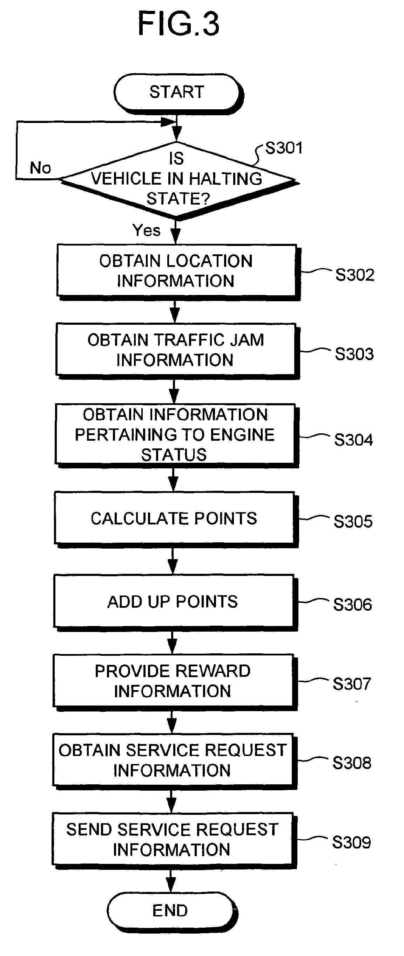

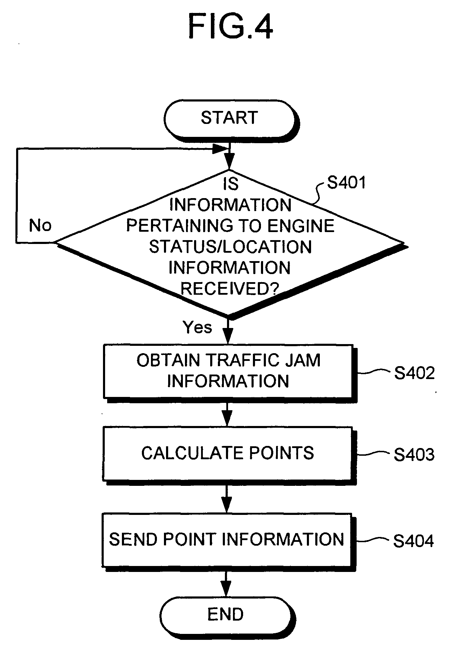

A process flow of the credit-points managing apparatus according to an embodiment of the present invention is explained next. Fig. 3 and Fig. 4 are flow charts of the process flow of the credit-points managing apparatus. In Fig. 3, the credit-points managing apparatus 100 shown in Fig. 1 determines whether the vehicle is in a halting state (Step S301).

If the vehicle is in a halting state ("Yes" in Step S301), the credit-points managing apparatus 100 obtains the information pertaining to the location of the vehicle (Step S302). The credit-points managing apparatus 100 obtains the information pertaining to the state of a traffic jam (Step S303). The credit-points managing apparatus 100 obtains the information pertaining to the engine status (Step S304).

The credit-points managing apparatus 100 calculates the credit-points (Step S305), and adds up the calculated credit-points (Step S306). The credit-points managing apparatus 100 provides the vehicle user the reward information based on the credit-points calculated in Step S305 and added up in Step S306 (Step S307).

The credit-points managing apparatus 100 obtains the service request information from the vehicle user (Step S308), and if required, sends the service request information to the service provider (Step S309), which ends the process.

In Fig. 4, the credit-points managing apparatus 200 shown in Fig. 2 determines whether the information pertaining to the engine status/location information, in addition to information pertaining to the traffic jam, is received from the vehicle 250 (Step S401).

If the information pertaining to the engine status is received ("Yes" in Step S401), the credit-points managing apparatus 200 obtains the information pertaining to the traffic jam (Step S402). However, if the information pertaining to the traffic jam is included in the information sent from the vehicle 250, this step may be skipped.

Next, the credit-points managing apparatus 200 calculates the credit-points (Step S403), and sends the information pertaining to the calculated credit-points (Step S404), which ends the process.

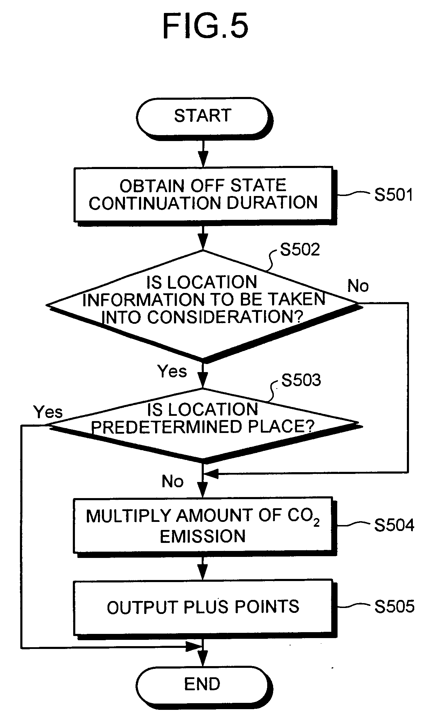

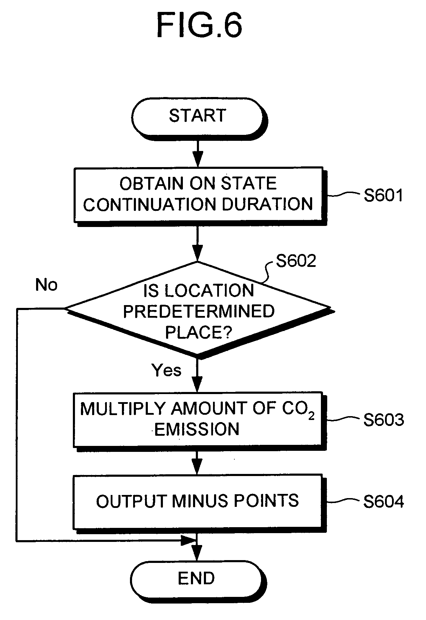

A process flow of the credit-points calculating unit 103 and 202 is explained next. Fig. 5 and Fig. 6 are flow charts of the process flow of the credit-points calculating unit 103 and 202 of the credit-points managing apparatus according to an embodiment of the present invention. In Fig. 5, the credit-points calculating unit 103, 202 first obtains the OFF state continuation duration (Step S501).

Next, the credit-points calculating unit 103, 202 determines whether the location information is to be taken into consideration (Step S502). For instance, the credit-points calculating unit 103, 202 assesses, based on pre-specified settings, whether credit-points are to be added as long as idling is stopped irrespective of the location, or whether credit-points are not to be added if the idling is stopped at certain specified or predetermined locations (such as a parking lot) where idling is customarily stopped.

When the credit-points calculating unit 103, 202 determines that the location information is to be taken into consideration ("Yes" in Step S502), the credit-points calculating unit 103, 202 determines whether the OFF state continuation duration obtained was from a predetermined location (Step S503). If it is determined that the location is a predetermined location ("Yes" in Step S503), the credit-points calculating unit 103, 202 adds no credit-points because this predetermined location calls for a mandatory idling stop, and the process ends.

However, if the credit-points calculating unit 103, 202 determines that the location information is not to be taken into consideration ("No" in Step S502), or if the idling is stopped at a location that is not predetermined ("No" in Step S503), the credit-points calculating unit 103, 202 multiplies the amount of CO₂ emitted from the vehicle by the OFF state continuation duration or a part thereof (Step S504). Further, based on the multiplication result, the credit-points calculating unit 103, 202 outputs plus credit-points (Step S505), which ends the process.

In Fig. 6, the credit-points calculating unit 103, 202 obtains the ON state continuation duration (Step S601). The credit-points calculating unit 103, 202 determines whether the ON state continuation duration obtained was from a predetermined location (Step S602). If it is determined that the location is not a predetermined location ("No" in Step S602), the credit-points calculating unit 103 and 202 adds no credit-points because this predetermined location calls for a mandatory idling stop, and the process ends.

However, if it is determined that the location is a predetermined location ("Yes" in Step S602), the credit-points calculating unit 103, 202 multiplies the amount of CO₂ emitted by the vehicle by the ON state continuation duration or a part thereof (Step S603). Further, based on the multiplication result, the credit-points calculating unit 103, 202 outputs minus credit-points (Step S604), and the process ends.

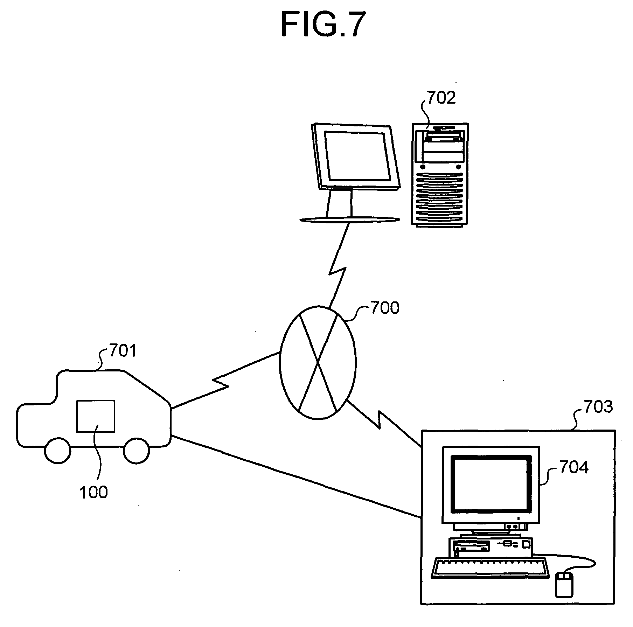

An overall configuration of a credit-points managing system that includes the credit-points managing apparatus according to an embodiment of the present invention is explained next. Fig. 7 through Fig. 9 are examples of the overall configuration of the credit-points managing system that includes the credit-points managing apparatus according to an embodiment of the present invention.

In Fig. 7, the credit-points managing system in a first embodiment includes a vehicle 701 in which the credit-points managing apparatus 100 is installed, a server 702, and an information processing terminal device 704 installed at an affiliated store 703, all of which are inter-connected via a network 700, such as the Internet.

The information pertaining to the credit-points are sent from the credit-points managing apparatus 100 installed in the vehicle 701 to the server 702 via the network 700. The information pertaining to the credit-points of each vehicle (that is, each customer), the service request information, and other relevant information are sent from the server 702 to the information processing terminal device 704 installed at the affiliated store 703 via the network 700.

The server 702 also receives from the credit-points managing apparatus 100 the information pertaining to a gift (service) request and sends this information to the affiliated store 703, which serves as a place where gifts can be exchanged against the credit-points and where the stocks of the gifts are managed.

It is also possible to include processes, such as checking the stocks of gifts, making available information regarding stock replenishing of out-of-stock articles and list of articles in stock, and deducting the credit-points that are exchanged for gifts, etc., as the processes that can be carried out between the server 702 and the credit-points managing apparatus 100.

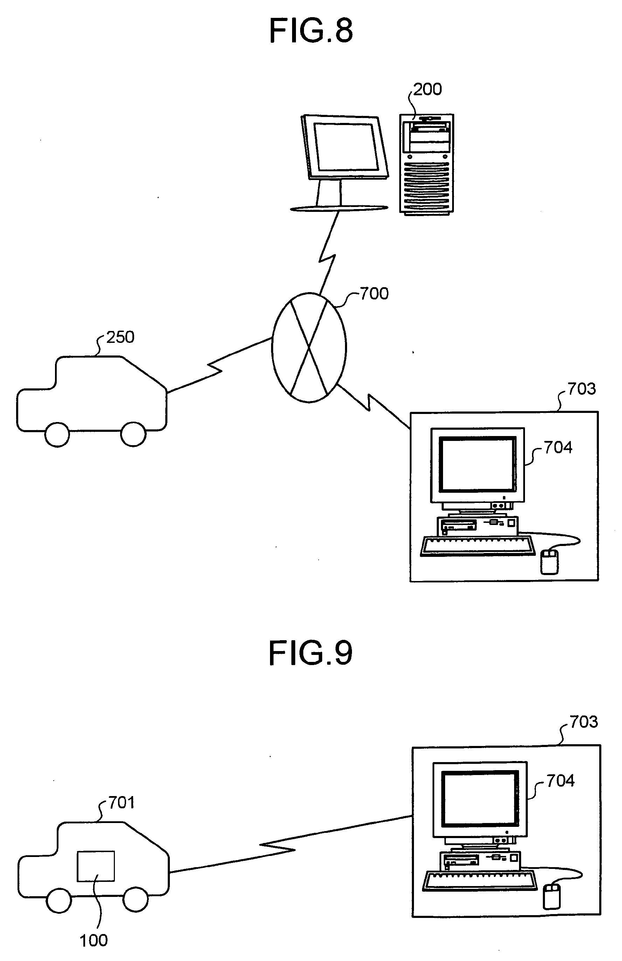

In Fig. 8, the credit-points managing system in a second embodiment includes the credit-points managing apparatus or server 200 and the information processing terminal device 704 installed at the affiliated store 703, all of which are inter-connected via the network 700, such as the Internet.

The vehicle 250 sends various types of detected information to the credit-points managing apparatus 200 via the network 700. The credit-points managing apparatus 200 calculates, based on the received information, the credit-points for the vehicle 250. The credit-points managing apparatus 200 also sends the information pertaining to the credit-points, reward information, etc., to the vehicle 250 via the network 700, as well as sends the information pertaining to the credit-points for each vehicle (that is, each customer) to the information processing terminal device 704 installed at a affiliated store 703. The vehicle 250 receives the reward information from the credit-points managing apparatus 200 via the network 700 and sends the service request information in response to the received reward information to the credit-points managing apparatus 200 via the network 700.

The credit-points managing apparatus 200 receives the service request information from the vehicle 250, and sends the information to the affiliated store 703, which serves as a place where gifts can be exchanged against the credit-points and where the stocks of the gifts are managed.

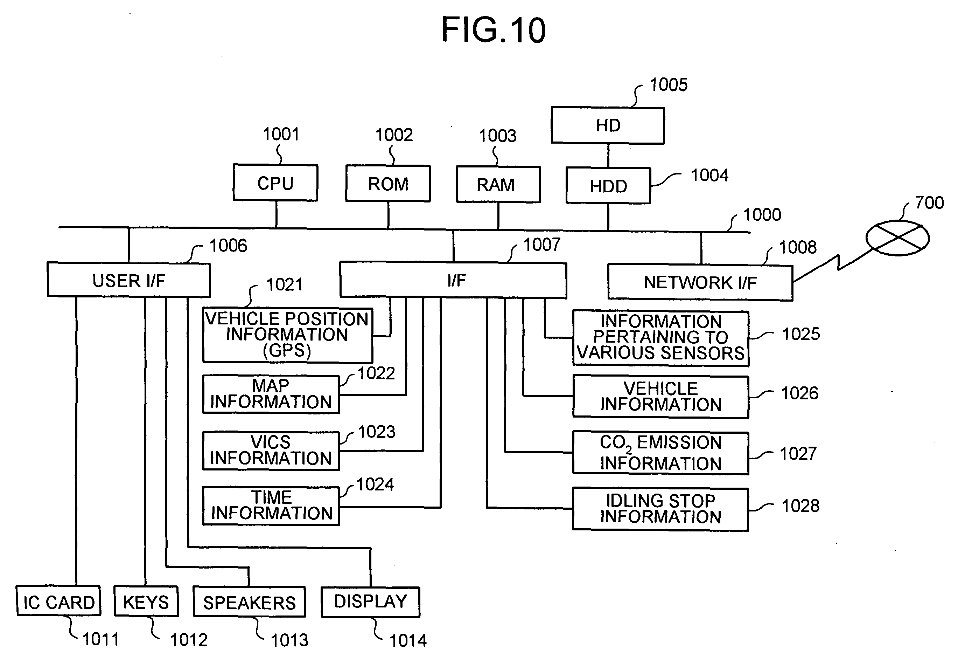

In the credit-points managing system in a third embodiment shown in Fig. 9, the information pertaining to the credit-points is downloaded from the credit-points managing apparatus 100 installed in the vehicle 701 to an integrated circuit (IC) card 1011 (see Fig. 10), explained later. Upon presentation of the IC card 1011 in the affiliated store 703, the information processing terminal device 704 reads the IC card 1011, and the credit-points are exchanged for gifts.

The hardware configuration of the credit-points managing apparatus according to an embodiment of the present invention is explained next. Fig. 10 is a block diagram of the hardware configuration of the credit-points managing apparatus according to an embodiment of the present invention.

In Fig. 10, the reference numeral 1000 represents a bus that connects all of the parts represented by the reference numerals 1001 through 1008, the reference numeral 1001 represents a central processing unit (CPU) that controls the entire credit-points managing apparatus, the reference numeral 1002 represents a Read-Only Memory (ROM) that stores the basic processing program of the credit-points managing apparatus, and the reference numeral 1003 represents a Random Access Memory (RAM) that is used as a working area by the CPU 1001. The reference numeral 1004 represents a hard disk drive (HDD) that reads data from and writes data to a hard disk (HD) 1005 under the control of the CPU 1001. The HD 1005 stores the data written to it under the control of the HDD 1004. Removable recording mediums such as a compact disk (CD), digital versatile disk (DVD), etc. may be used instead of or in addition to the HD 1005.

The reference numeral 1006 represents a user interface (I/F) that functions as an interface with the vehicle user (user) and is connected to an IC card 1011, various keys 1012, speakers 1013, and a display 1014. The IC card 1011 can download history information of the gained credit-points and can upload to the credit-points managing apparatus (100) personal information of the vehicle user and the downloaded history information of the credit-points.

The reference numeral 1007 represents an interface (I/F) that collects, via a cable or radio, various types of information 1021 through 1028. The details about the types of information 1021 through 1028 are explained later. The function of the credit-points calculating unit 103, 202 shown in Fig. 1 is realized by the parts represented by reference numerals 1000 through 1006.

The reference numeral 1008 represents a network interface (I/F) that connects to the network via a cable or radio, and functions as an interface with other information processing devices, such as the server 702 and the information processing terminal device 704, through the network 700.

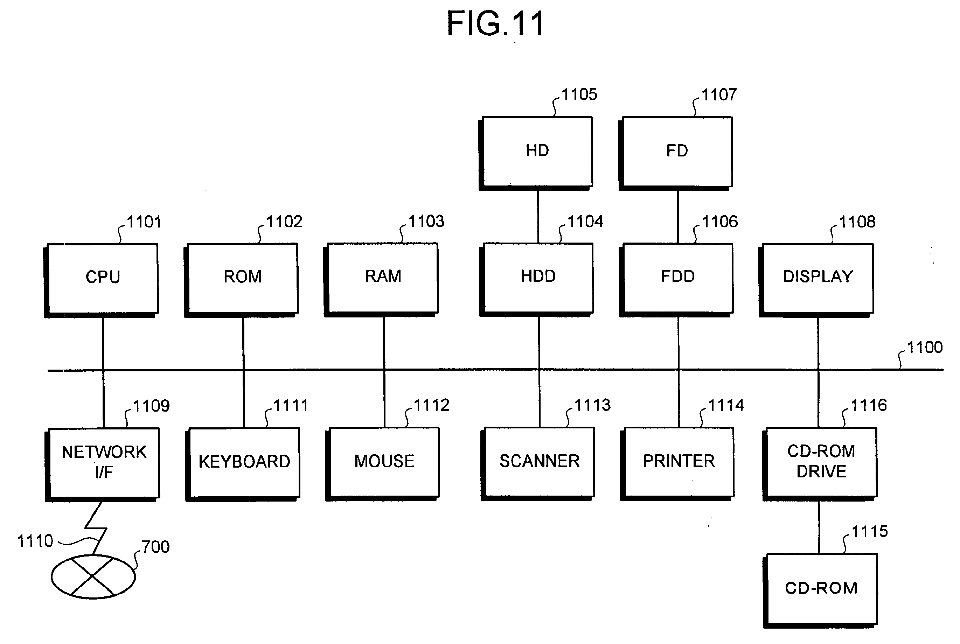

Fig. 11 is a block diagram of the hardware configuration of the server and the information processing terminal device included in the credit-points managing system. In Fig. 11, the reference numeral 1101 represents a CPU that controls the entire credit-points managing apparatus, the reference numeral 1102 represents a ROM that stores the basic input/output programs, and the reference numeral 1103 represents a RAM that is used as a working area by the CPU 1101.

The reference numeral 1104 represents a HDD that reads data from and writes data to an HD 1105 under the control of the CPU 1101. The HD 1105 stores the data written to it under the control of HDD 1104. The reference numeral 1106 represents a flexible disk drive (FDD) that controls reading data from and writing data to a flexible disk (FD) 1107 under the control of the CPU 1101. The FD 1107 stores the data written to it under the control of the FDD 1106 and may be any removable recording medium.

The reference numeral 1108 represents a display that displays cursors, menus, windows, etc. or data such as texts and images. The reference numeral 1109 represents a network I/F that is connected to a communication channel 1110 via the network 700 and functions as an interface between the network 700 and the CPU 1101. The reference numeral 1111 represents a keyboard having a plurality of keys by which text, numerals, various instructions, etc. can be input. The reference numeral 1112 represents a mouse by which selection or execution of an instruction, selection of a process target, shifting of a cursor, etc. can be performed.

The reference numeral 1113 represents a scanner that optically reads texts and images, the reference numeral 1114 represents a printer that prints texts or images under the control of the CPU 1101, the reference numeral 1115 represents a compact disk - read-only memory (CD-ROM), which is a removable recording medium, the reference numeral 1116 represents a CD-ROM drive that controls the reading of data from the CD-ROM 1115, and the reference numeral 1100 represents a bus or a cable that connects all of the parts represented by the reference numeral 1101 through 1115.

The content of the types of information 1021 through 1028 collected by the I/F 1007 shown in Fig. 10 are explained next. The types of information include vehicle position information (Global Positioning System (GPS)) 1021, map information 1022, Vehicle Information and Communication System (VICS) information 1023, time information 1024, information pertaining to various sensors 1025, vehicle information 1026, CO₂ emission information 1027, idling stop information 1028, and other relevant information.

The vehicle position information (GPS) 1021 is information pertaining to a geometric position with respect to a GPS satellite determined by radio waves received from the GPS satellite and can be measured anywhere on the earth. The position is measured by using a carrier radio wave L1 having a frequency of 1.575.42MHz and which is modulated by the C/A (Coarse and Access) code and the navigation message.

The C/A code has a bit-rate of 1.023 Mbps, and the length of the code is 1023 bits = 1 ms. A navigation message has a bit-rate of 50 bps, and the length of the code in a subframe is 300 bits = 6 s, and in a main frame is 1500 bits = 30 s. Five subframes make one main frame, 25 main frames make one master frame. Using this data, the current position of the vehicle is calculated in terms of latitude and longitude. Information collected by a gyro sensor may also be added.

The map information 1022 information relates to information pertaining to the location of the halted vehicle in terms of longitude and latitude derived from the vehicle position information (GPS) 1021. In particular, the map information pertains to whether the halted vehicle is off a street, such as in a parking space, or on a side strip or in a time-restricted parking space. Since the vehicle is assumed to be in the state of idling stop when it has halted at any of the above locations, credit-points are deducted if the vehicle is found to continue idling for a predetermined duration at any of these locations. Determination may also be based on whether the vehicle has halted on a side strip or a time-restricted parking space.

The VICS information 1023 is traffic information provided using a beacon (information communication facility), frequency modulated (FM) multimedia, etc. that are installed on the streets. In particular, the VICS information 1023 includes information relating to sections where a traffic jam has occurred, time required between major credit-points, traffic hindrance such as accidents, vehicle breakdown, obstacle on the street, road construction, miscellaneous activity, etc., provisional regulations such as road blockade, speed regulation, and lane regulation, and availability or non-availability of parking space, etc. The VICS information is particularly used for determining whether a vehicle has halted on the street due to a traffic jam.

The time information 1024 pertains to information relating to an idling stop duration. The idling stop duration is extracted by first determining that a vehicle is 'moving.' A vehicle is considered 'moving' when the duration of moving is preceded and followed by long periods of a halting state. The duration for which the vehicle halts in the midst of 'moving' is extracted as the idling stop duration. The counting of the idling stop duration starts 20 seconds after the vehicle is halted. These 20 seconds may be taken as the time required (time delay) for shutting off the engine after the vehicle is halted.

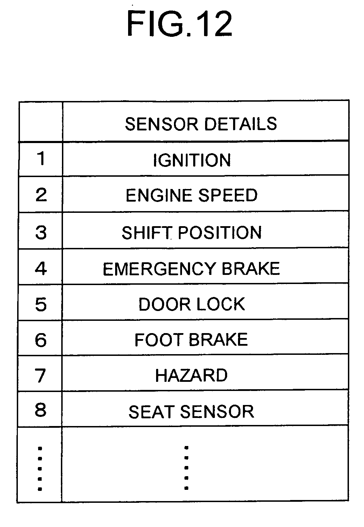

Fig. 12 is a list of information pertaining to various sensors 1025. In particular, the information pertaining to various sensors 1025 includes information relating to the status of the ignition, engine speed, shift position, emergency brake, door lock, foot brake, hazard, and seat sensor.

More specifically, the information pertaining to ignition relates to whether the key is inserted or not. It can be determined from the information pertaining to ignition whether the vehicle user has parked the vehicle or has only halted it for a while. It can be determined from the information pertaining to engine speed whether the vehicle is moving or idling. From the information pertaining to shift position, it can be determined whether the shift position of a halted vehicle is 'P (Parking)' or 'N (Neutral).' From the information pertaining to the emergency brake, it can be determined that the vehicle is in a halting state.

It can be determined from the information pertaining to the door lock that there is a high probability of the vehicle being in a halting state when the door is opened or closed. It can be determined from the information pertaining to the foot brake that the vehicle would be in a temporary halting state upon application of the foot brake. From the information related to the hazard, it can be determined that the vehicle is halted if the hazard is set to ON. When a vehicle is parked the hazard is normally set to OFF. Consequently, hazard ON may be taken to mean a temporary halt. If an idling vehicle remains stationary for more than a predetermined duration with the hazard ON, then it should be awarded minus credit-points.

It can be determined from the information pertaining to the seat sensor whether the vehicle user is in the seat, and thus whether the vehicle is parked or just halted for a while. In particular, the seat sensor determines whether the vehicle user is in the seat by gauging the weight on the seat and detecting whether the seat belt is in use.

The vehicle information 1026 pertains to the model and the year of manufacturing of the vehicle, from which the amount of CO₂ emission in a predetermined duration can be determined. The CO₂ emission information 1027 may be directly used in cases where the amount of CO₂ emission in a predetermined duration is known without vehicle identification.

The idling stop information 1028 pertains to the history of idling stop performed in a vehicle equipped with an idling stop function.

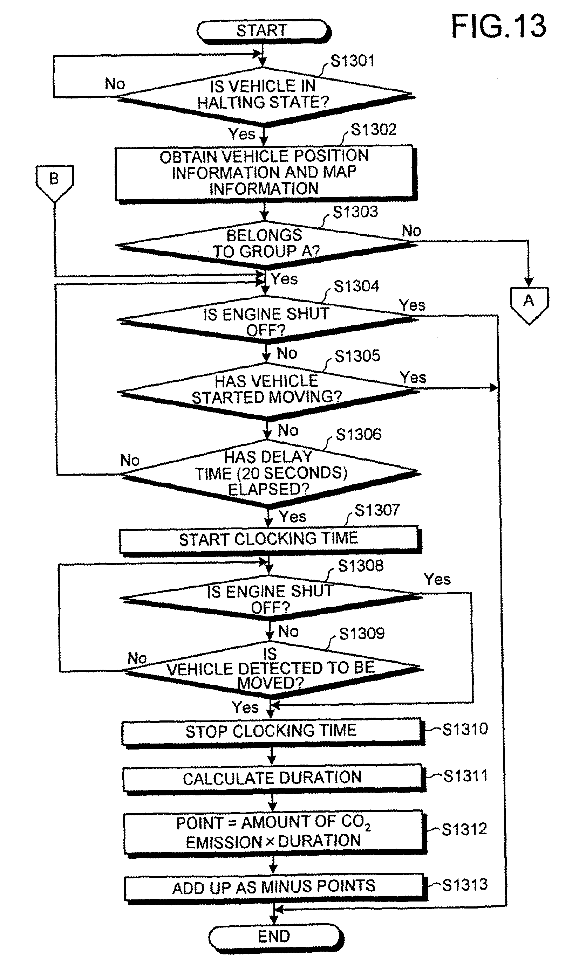

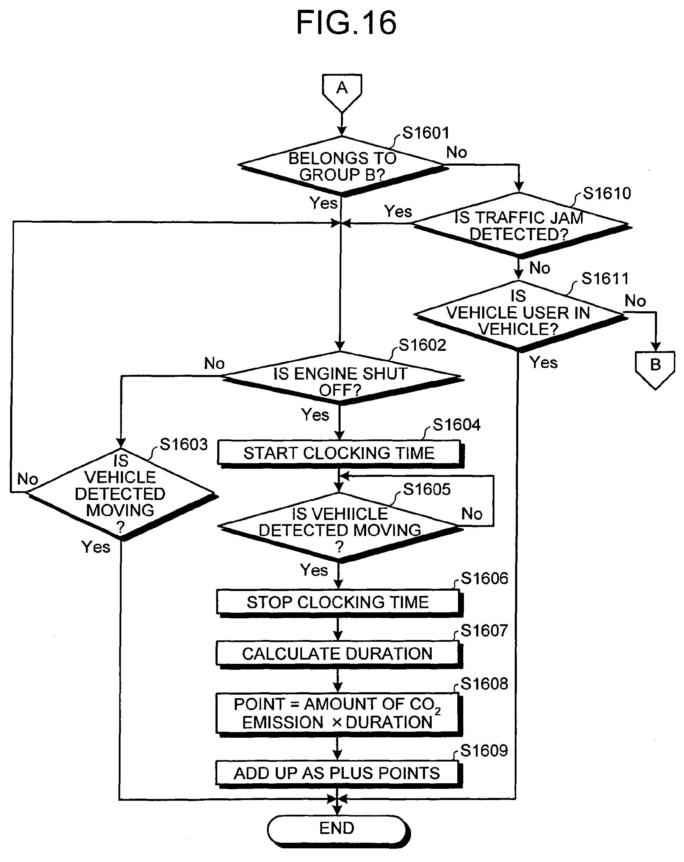

A process flow of the credit-points managing apparatus according to an embodiment of the present invention is explained next. Fig. 13 and Fig. 16 are flow charts of the process flow of the credit-points managing apparatus.

In the flow chart shown in Fig. 13, the credit-points managing apparatus determines whether the vehicle 250, 701 is in a halting state (Step S1301). If the vehicle 250, 701 is in a halting state ("Yes" in Step S1301), the credit-points managing apparatus obtains the vehicle position information 1021 and the map information 1022 (Step S1302). From the obtained information, the credit-points managing apparatus determines the group to which the halting location belongs (Step S1303).

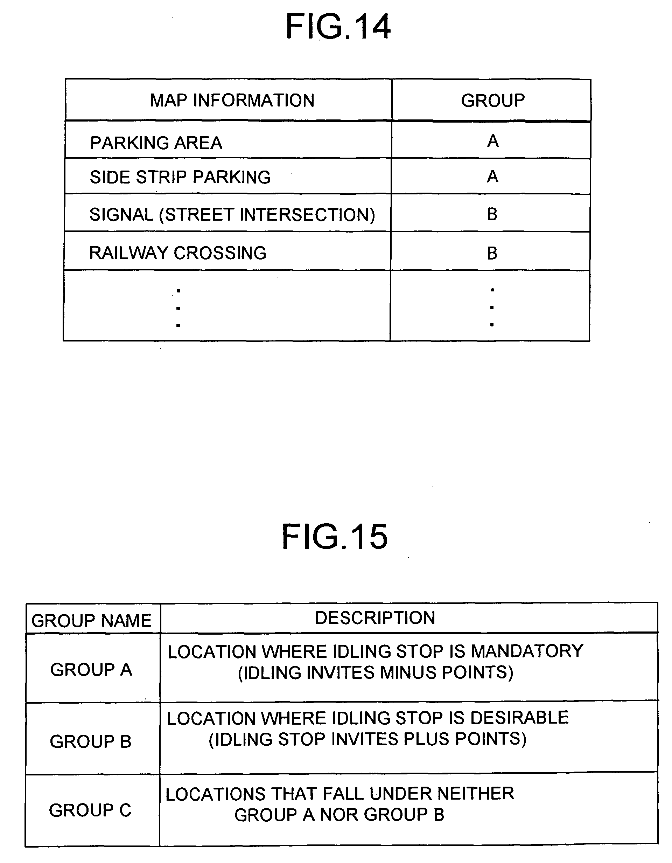

Fig. 14 is a table showing the relation between the map information and the location group. Fig. 15 is a table showing the location groups and their details. According to Fig. 14, parking areas and side strips belong to "Group A" while signals (street intersection) and railway crossings belong to "Group B".

As shown in Fig. 15, idling stop is mandatory at the locations that belong to "Group A." A vehicle that is idling and halted at any of the locations belonging to "Group A" invites minus credit-points. Similarly, idling stop is desirable at the locations that belong to "Group B". A vehicle halted at any of the locations belonging to "Group B" and not idling is awarded plus credit-points. Locations that fall under neither "Group A" nor "Group B" belong to "Group C."

If the halting location does not belong to "Group A" ("No" in Step S1303), the process flow follows the flow chart shown in Fig. 16. If the halting location belongs to "Group A" ("Yes" in Step S1303), the credit-points managing apparatus determines if the engine is shut off (Step S1304). If the engine is shut off ("Yes" in Step S1304), no credit-points are added, and the process ends.

If the engine is not shut off ("No" in Step S1304), the credit-points managing apparatus determines whether the vehicle has started moving (Step S1305). If the vehicle is detected to be moving ("Yes" in step S1305), no credit-points are added, and the process ends.

If the vehicle is not detected to be moving ("No" in Step S1305), the credit-points managing apparatus determines whether 20 seconds have elapsed since the vehicle has come to a halt (Step S1306). If 20 seconds have not elapsed ("No" in Step S1306), the process returns to Step S1304, and Steps S1304 through S1306 are repeated.

If 20 seconds have elapsed ("Yes" in Step S1306), the credit-points managing apparatus starts clocking time (Step S1307). The credit-points managing apparatus stops clocking time (Step S1310) if it determines that either the engine has been shut off ("Yes" in Step S1308) or the vehicle is detected to be moving ("Yes" in Step S1309).

The credit-points managing apparatus calculates the duration from clocking start to clocking end (Step S1311), calculates the credit-points by multiplying the calculated duration by the amount of CO₂ emitted from the vehicle in one second (Step S1312), and adds up the calculated credit-points as minus credit-points (Step S1313), which ends the process.

In Fig. 16, if the halting location belongs to "Group B" ("Yes" in Step S1601), credit-points managing apparatus determines whether the engine is shut off (Step S1602). If the engine is not shut off ("No" in Step S1602), the credit-points managing apparatus determines whether the vehicle has started moving (Step S1603). If the vehicle is not detected to be moving ("No" in Step S1603), no credit-points are added, and the process ends.

If the engine is shut off ("Yes" in Step S1602), the credit-points managing apparatus starts clocking time (Step S1604), and stops clocking time (Step S1606) when the vehicle is detected to be moving ("Yes" in Step S1605).

The credit-points managing apparatus calculates the duration from clocking start to clocking end (Step S1607), calculates the credit-points by multiplying the calculated duration by the amount of CO₂ that is emitted from the vehicle in one second (Step S1608), and adds up the calculated credit-points as plus credit-points (Step S1609), which ends the process.

If the halting location does not belong to "Group B" ("No" in Step S1601), the credit-points managing apparatus takes the halting location as belonging to "Group C" and determines whether a traffic jam is detected (Step S1610). If a traffic jam is detected ("Yes" in Step S1610), the process returns to Step S1602 and the process flow of Group B is followed.

If no traffic jam is detected ("No" in Step S1610), the credit-points managing apparatus determines whether the vehicle user is in the vehicle (Step S1611). If the vehicle user is not in the vehicle ("No" in Step S1611), the credit-points managing apparatus determines that the vehicle is in a halting state and proceeds to Step S1304 shown in Fig. 13. If the vehicle user is in the vehicle ("Yes" in Step S1611), no credit-points are added, and the process ends.

In summary, the halt information obtaining unit 101 obtains the information that the vehicle is in a halting state, the engine status information obtaining unit 102 obtains the information pertaining to the status of the driving power source (i.e., the engine), and the credit-points calculating unit 103 calculates the credit-points based on the status of the engine obtained by the engine status information obtaining unit 102. Consequently, it is possible to detect vehicles idling at the locations where idling is prohibited or vehicles practicing idling stop at the locations where idling stop is encouraged and accordingly credit-points are awarded.

By awarding credit-points to vehicle users for adopting methods of driving that are eco-friendly, by controlling CO₂ emission by abstaining from idling, and by enabling the vehicle users to exchange the credit-points gained for services or gifts, the ecological awareness of the vehicle users can be enhanced. Further, the exchange of credit-points for gifts establishes contact between the service/gift provider and the vehicle user, which enhances customer relations.

In addition, the engine status includes at least either the ON state (idling state) of the engine and the ON state continuation period, or the OFF state (idling stop) of the engine and the OFF state continuation period. Consequently, credit-points can be awarded based on the idling state continuation duration or the idling stop state continuation duration.

Moreover, the credit-points calculating unit 103 calculates the credit-points based on the numerical value obtained by multiplying the amount of CO₂ that is emitted from the vehicle in a predetermined duration by the continuation duration or a part thereof, such as a continuation duration-delay time of 20 seconds. Consequently, credit-points can be awarded according to one's consideration for the environment.

Furthermore, plus credit-points are awarded based on the OFF state continuation duration of the engine and minus credit-points are awarded based on the ON state continuation duration of the engine, and the plus credit-points and minus credit-points are added together. Consequently, the balancing of the credit-points is performed unambiguously.

Moreover, the location information obtaining unit 104 obtains the location information of the vehicle, and the credit-points calculating unit 103 calculates the credit-points based on the status of the engine obtained by the engine status information obtaining unit 102 and the location information obtained by the location information obtaining unit 104. Consequently, credit-points can be awarded against idling or for idling stop after finding out whether the vehicle is halted at a location where idling is prohibited or at a location where idling stop is encouraged.

Furthermore, the traffic jam information obtaining unit 105 obtains information pertaining to the status of the traffic jam at the location obtained by the location information obtaining unit 104 or the associated location which is associated with the location obtained by the location information obtaining unit 104. The credit-points calculating unit calculates the credit-points based on the status of the engine obtained by the engine status information obtaining unit 102, the location information obtained by the location information obtaining unit 104, and the information obtained by the traffic jam information obtaining unit 105. Consequently, credit-points can be awarded for not idling during a traffic jam.

Moreover, the credit-points storing unit 106 accumulates the credit-points calculated by the credit-points calculating unit 103. Consequently, the vehicle user can exchange the accumulated credit-points for gifts (services).

Furthermore, the reward information providing unit 107 makes available to the vehicle user the information pertaining to rewards based on the credit-points calculated by the credit-points calculating unit 103 and accumulated by the credit-points storing unit 106. Consequently, the vehicle user can easily ascertain the worth of the credit-points earned.

Moreover, the service request information obtaining unit 108 obtains from the vehicle user the service request information in response to the reward information provided to the vehicle user by the reward information providing unit 107. The service request information transmitting unit 109 sends to the service provider the service request information obtained by the service request information obtaining unit 108. Consequently, the service desired by the vehicle user can be swiftly and assuredly provided to the vehicle user

Furthermore, the receiving unit 201 receives from the vehicle 250 information pertaining to the engine status of the vehicle 250. The credit-points calculating unit 202 calculates the credit-points based on the information pertaining to the engine status received from the receiving unit 201. Consequently, vehicles idling at a location where idling is prohibited and vehicles not idling where idling stop is encouraged can be detected and appropriate credit-points can be awarded to the vehicles.

Moreover, the receiving unit 201 receives from the vehicle 250 the location information of the vehicle 250, and the credit-points calculating unit 202 calculates the credit-points based on the information pertaining to the engine status and the location information. Consequently, credit-points can be awarded against idling or idling stop after finding out whether the vehicle is halted at a location where idling is prohibited or at a location where idling stop is encouraged.

The traffic jam information obtaining unit 203 obtains information pertaining to the status of a traffic jam at the location of the vehicle or an associated location. The credit-points calculating unit 202 calculates the credit-points based on the information pertaining to the engine status, the position information, and the information obtained by the traffic jam information obtaining unit 203. Consequently, credit-points can be awarded for not idling during a traffic jam.

Furthermore, the transmitting unit 204 sends to the vehicle 250 the information pertaining to the credit-points calculated by the credit-points calculating unit 202. Consequently, the credit-points earned by the vehicle can be verified by the vehicle user.

A credit-points calculating method may be realized by a computer program readable by a computer, such as a microcomputer, or by executing the program on a personal computer or a workstation that includes a server. The program is recorded on a computer-readable recording medium such as the HD, FD, CD-ROM, magneto optic (MO), DVD, etc. and is realized when the computer reads the program from the recording medium. The program may also be a transmission medium that can be distributed via the network 700 such as the Internet.

The present document incorporates by reference the entire contents of Japanese priority document, 2004-031267 filed in Japan on February 6, 2004.

Although the invention has been described with respect to a specific embodiment for a complete and clear disclosure, the appended claims are not to be thus limited but are to be construed as embodying all modifications and alternative constructions that may occur to one skilled in the art which fairly fall within the basic teaching herein set forth.

## Claims

1. A credit-points managing apparatus comprising:
a halt information obtaining unit (101) that obtains information that indicates whether a vehicle is in a halting state;
an engine status information obtaining unit (102) that obtains information pertaining to a status of an engine of the vehicle when the halt information obtaining unit (101) obtains information indicating that the vehicle is in a halting state; and
a credit-points calculating unit (103) that calculates credit-points based on the status of the engine obtained by the engine status information obtaining unit (102).

2. The credit-points managing apparatus according to claim 1, wherein the information pertaining to a status of an engine includes at least one of information on whether the engine is running and a duration for which the engine is running, and information on whether the engine is not running and a duration for which the engine is not running.

3. The credit-points managing apparatus according to claim 2, wherein the credit-points calculating unit (103) calculates the credit-points as the product of an amount of carbon dioxide emitted from the vehicle in a predetermined unit time and all or part of the duration for which the engine is either running or not running.

4. The credit-points managing apparatus according to claim 3, wherein the point calculated based on the duration for which the engine is not running are positive credit-points and the credit-points calculated based on the duration for which the engine is running are negative credit-points.

5. The credit-points managing apparatus according to claim 4, wherein the credit-points calculating unit (103) adds together the positive credit-points and the negative credit-points.

6. The credit-points managing apparatus according to any one of claims 1 to 5, further comprising:
a location information obtaining unit (104) that obtains information pertaining to a location of the vehicle,
wherein the credit-points calculating unit (103) calculates the credit-points based on the status of the engine obtained by the engine status information obtaining unit (102) and the information pertaining to the location obtained by the location information obtaining unit (104).

7. The credit-points managing apparatus according to claim 6, further comprising:
a traffic jam information obtaining unit (105) that obtains information pertaining to a status of a traffic jam at a location according to the information pertaining to the location of the vehicle or a location associated with the location of the vehicle, and
wherein the credit-points calculating unit (103) calculates the credit-points based on the status of the engine obtained by the engine status information obtaining unit (102), the location information obtained by the location information obtaining unit (104), and the information obtained by the traffic jam information obtaining unit (105).

8. The credit-points managing apparatus according to any one of claims 1 to 7, further comprising a credit-points storing unit (106) that accumulates the credit-points calculated by the credit-points calculating unit (103).

9. The credit-points managing apparatus according to any one of claims 1 to 7, further comprising a reward information providing unit (107) that provides to a vehicle user information pertaining to rewards based on the credit-points calculated by the credit-points calculating unit (103).

10. The credit-points managing apparatus according to claim 9, further comprising:
a service request information obtaining unit (108) that obtains service request information from the vehicle user in response to the reward information provided by the reward information providing unit (107).

11. The credit-points managing apparatus according to claim 10, further comprising:
a service request information transmitting unit (109) that sends the service request information obtained by the service request information obtaining unit (108) to a service provider.

12. The credit-points managing apparatus according to claim 8, further comprising a reward information providing unit (107) that provides to a vehicle user information pertaining to rewards based on the credit-points stored in the credit-points storing unit (106).

13. The credit-points managing apparatus according to claim 12, further comprising:
a service request information obtaining unit (108) that obtains service request information from the vehicle user in response to the reward information provided by the reward information providing unit (107).

14. The credit-points managing apparatus according to claim 13, further comprising:
a service request information transmitting unit (109) that sends the service request information obtained by the service request information obtaining unit (108) to a service provider.

15. A vehicle comprising a credit-points managing apparatus (100) that includes
a halt information obtaining unit (101) that obtains information that indicates whether a vehicle is in a halting state;
an engine status information obtaining unit (102) that obtains information pertaining to a status of an engine of the vehicle when the halt information obtaining unit (101) obtains information indicating that the vehicle is in a halting state; and
a credit-points calculating unit (103) that calculates credit-points based on the status of the engine obtained by the engine status information obtaining unit (102).

16. A credit-points calculating method, comprising:
obtaining information that indicates whether a vehicle is in a halting state;
obtaining information pertaining to a status of an engine of the vehicle when the information is obtained indicating that the vehicle is in a halting state; and
calculating credit-points based on the obtained status of the engine.

17. The credit-points calculating method according to claim 16, further comprising:
obtaining information pertaining to a location of the vehicle,
wherein the calculating includes calculating the credit-points based on the status of the engine and the location of the vehicle.

18. The credit-points calculating method according to claim 17, further comprising:
obtaining information pertaining to a status of a traffic jam at a location according to the location of the vehicle or a location associated with the location of the vehicle,
wherein the calculating includes calculating the credit-points based on the status of the engine, the location of the vehicle, and the information pertaining to a status of a traffic jam.

19. A computer program that causes a computer to execute:
obtaining information that indicates whether a vehicle is in a halting state;
obtaining information pertaining to a status of an engine of the vehicle when the information is obtained indicating that the vehicle is in a halting state; and
calculating credit-points based on the obtained status of the engine.
